# EUROPEAN PATENT APPLICATION

(11) **EP 4 575 403 A1**
(43) Date of publication of application: **25.06.2025**
(21) Application number: 23217784.0
(22) Date of filing: 18.12.2023
(51) Int. Cl.: G01C 21/20, G06T 7/73

(54) **METHOD FOR IMPROVED DATA CAPTURING OF SURROUNDINGS**

(71) Applicant: LEICA GEOSYSTEMS AG, 9435 Heerbrugg (CH)
(72) Inventor: KOCH, Thomas, 73447 Oberkochen (DE); FACCHIN, Aldo, 33082 Azzano Decimo (IT); Nuzzo, Alessandro, 9030 Abtwil SG (CH)
(74) Representative: Kaminski Harmann

(57) **Abstract**

The present invention relates to a computer-implemented method for capturing data of surroundings 5 by means of a data capturing unit 16, wherein the method comprises receiving path information 19 regarding a predefined data capturing path 1, the path information 19 comprising at least coordinates, in particular GNSS coordinates, of a plurality of points of the predefined data capturing path 1; and automatically performing a navigation and data capturing procedure, wherein the navigation and data capturing procedure comprises continuously monitoring a current position 2 of the data capturing unit 16; calculating a transfer path 3,3' from the current position 2 to a start position 4 of the predefined data capturing path 1; continuously providing navigation commands 17 to the user 15 to guide the user 15 along the transfer path 3,3'; continuously determining, based on the path information 19 and on the continuously monitored position 2, whether the data capturing unit 16 has reached the start position 4; if the data capturing unit 16 has reached the start position 4, providing a start command 20 to the data capturing unit 16, the start command 20 causing the data capturing unit 16 to capture data of the surroundings 5; continuously providing navigation commands 17 to the user 15 to guide the user 15 to an end position 6 of the predefined data capturing path 1; and if the data capturing unit 16 has reached the end position 6, providing an end command 20 to the data capturing unit 16, the end command 20 causing the data capturing unit 16 to end capturing data of the surroundings 5.

## Description

### FIELD OF THE INVENTION

The present invention relates to a computer-implemented method for capturing data of surroundings by means of a data capturing unit.

### BACKGROUND OF THE INVENTION

Mobile mapping is used in surveying projects as well as in other applications, such as engineering, entertainment, automotive or robotics, where a 2D or 3D model of an object or environment is required. For these purposes, common mobile mapping systems consist of a sensor unit equipped with LiDAR scanners and/or cameras to create a 2D or 3D model of the environment / surroundings.

Typical mobile mapping systems are vehicle-based systems (e.g. in cars, trains or boats) in which the sensor unit is mounted on the roof of the vehicle and collects data on the surroundings while the vehicle is moving. There are also mobile mapping systems in which the user walks through the surroundings while holding the sensor unit in his hand or carrying the sensor unit on his body, for example as a kind of backpack.

The sensor unit is triggered through a software interface with which the user interacts during the data acquisition / capturing. These interactions with the software interface are needed to trigger different behaviors from the sensor unit to build the 2D or 3D model with the desired levels of accuracy and precision. Examples of interactions of the user with the sensor unit or a control unit for the sensor unit are for example turn on and off the LiDAR scanners and/or the cameras, change sensors settings in real time, adjust map view and check for errors and warnings.

The fact that the user has to interact with the software interface during data capturing in prior art systems means that there is a risk that the user could, for example, make a mistake when switching on the sensor unit and thus not fully capture the data from the surroundings or capture data of specific surroundings, e.g. like military facilities, from which he should not have captured the data. There is also the risk that the user will be distracted by the interaction with the software interface in the case of hand-held systems or vehicle-based systems and thus get lost or even fall or cause a traffic accident. In other words, the user has to both pay attention to the predefined data capturing path (road in case of a car vehicle-based system) but also to the software interface which is a potential accident risk.

In addition, the mobile mapping systems known from the prior art have the further disadvantages that the user must be an expert in handling the mapping system, for example knowing exactly how and when to trigger the sensor unit, and that in the case of a vehicle system at least two users, namely the driver and the operator, must interact with the user interface in order to follow the plan.

Furthermore, the planning of such a surveying operation is a complex task for a human since many factors have to be coordinated. For example, it must be determined how several predefined data capturing paths are to be arranged or lined up so that the data of the surroundings is captured as completely as possible, but the time required for this and the distance to be covered are as short as possible. Such large and complex planning, which is carried out by a human, is very error-prone and also time-consuming and cost-intensive.

All this leads to higher costs per project, potential errors in the final 2D or 3D model due to human interaction and the complexity of the usability due to the introduction of a new technology, as well as a potential source of danger for the user and other people.

Consequently, there is a need for computer-implemented methods and computer systems, which perform the navigation of the user through the surroundings along predefined data capturing paths as well as the control of the data capturing unit, for example a laser scanner or a camera, for the complete data capturing of the surroundings, so that the user can concentrate only on the movement.

### OBJECT OF THE INVENTION

It is therefore an object of the invention to provide a computer-implemented method, a computer system and a computer program product which overcome the disadvantages of the prior art, particularly in the light of safety, error reduction and cost efficiency.

Another object of the invention is to provide a computer-implemented method, a computer system and a computer program product for improved navigation and data capturing of surroundings.

These objects are achieved by realizing at least part of the features of the independent claims. Features which further develop the inventions in an alternative or advantageous manner are described in the dependent patent claims.

### SUMMARY OF THE INVENTION

The present invention relates to a computer-implemented method for capturing data of surroundings by means of a data capturing unit (e.g. a portable / movable data capturing unit), wherein the method comprises:
- receiving path information regarding a predefined data capturing path, the path information comprising at least coordinates, in particular GNSS coordinates, of a plurality of points of the predefined data capturing path; and
- automatically performing a navigation and data capturing procedure,
wherein the navigation and data capturing procedure comprises:
- continuously monitoring a current position of the data capturing unit;
- calculating a transfer path from the current position to a start position of the predefined data capturing path;
- continuously providing navigation commands to an user to guide the user along the transfer path;
- continuously determining, based on the path information and on the continuously monitored position, whether the data capturing unit has reached the start position;
- if the data capturing unit has reached the start position, providing a start command to the data capturing unit, the start command causing the data capturing unit to capture data of the surroundings;
- continuously providing navigation commands to the user to guide the user to an end position of the predefined data capturing path; and
- if the data capturing unit has reached the end position, providing an end command to the data capturing unit, the end command causing the data capturing unit to end capturing data of the surroundings.

A predefined data capturing path can also be described as a "track", wherein every predefined data capturing path being part of the planned job. A job, therefore, will always be composed by a specific number of predefined data capturing path (tracks). A "transfer path" is every path the user has to follow to reach the start point of the next planned track. Thus, a planned job is a combination of transfers and tracks through which the user must go through to accomplish the desired result. Every track has a start point and an end point representing the limit of the acquisition the user wants to perform. Moreover, they contain specific sensor unit settings such as camera shooting frequency and LiDAR point cloud density previously defined by the user in the planning phase. Because of this, a planned job results in a list of tracks geolocalized on the map through a defined sets of start and end coordinates.

Regarding the step "if the data capturing unit has reached the start position, providing a start command to the data capturing unit, the start command causing the data capturing unit to capture data of the surroundings" of the computer-implemented method according to the invention, it can be said in other words, once the sensor unit reaches a start point of a planned track, and the necessary conditions are met, the sensor unit will start recording setting up automatically each sensor according to the planned settings. Exemplary conditions to start recording a planned track are (this list is not exhaustive and is not intended to be restrictive, it is merely examples of starting conditions):
- the sensor unit being close enough to the start point within an oriented bounding box;
- normalized projection along the segment to be greater than a specified threshold;
- sensor unit orientation must be within a tolerance cone of 120° with respect to the track orientation;
- the track to be captured must be the right one according to the optimized plan;
- the track to be approached must not be already recorded or disabled (e.g., by the user).

After the recording is started the sensor unit will maintain its settings along the track until it reaches the end point where the recording will be interrupted automatically.

The computer-implemented method according to the invention enables precise navigation of the user to and along predefined data capturing paths in the surroundings from which the data should be captured, as well as accurate and autonomous control of the data capturing unit, for example a laser scanner or a camera, to fully capture the data of the surroundings. This allows the user to concentrate fully on moving around correctly and safely, whether on foot or driving a vehicle. Thus, the computer-implemented method according to the invention contributes, among other things, to a complete, error-reduced, fast, cost-efficient and safe data capturing of the surroundings and thus solves the problems of the prior art.

In other words, the auto-capture solution according to the invention solves the prior art problems throughout the complete workflow, from planning to acquisition, allowing a hands-free experience guiding the user through the optimal path while triggering and configuring sensor unit in an autonomous way.

In one exemplary embodiment of the computer-implemented method according to the invention, the current position of the data capturing unit is continuously monitored by means of at least one of the following (this list is not exhaustive and is not intended to be restrictive):
- GNSS;
- SLAM;
- IMU; and
- Odometer (mechanical (e.g. wheel sensor) or optical).

In a further exemplary embodiment of the computer-implemented method, the method further comprises generating a particularly colored 2D and/or 3D model of the surroundings by means of the data captured by the data capturing unit.

In a further exemplary embodiment, motion of the data capturing unit is provided by
- the user carrying the data capturing unit; or
- the data capturing unit being mounted on a transport means controlled by the user,
   in particular wherein the transport means is
- a vehicle, in particular a car or motorcycle;
- a boat;
- an airplane; or
- a drone.

In a further exemplary embodiment, the data capturing unit comprises one or more laser scanners and/or one or more cameras (in other words image capturing units) and is configured to capture 3D point-cloud data and/or image data of the surroundings.

For example, the data capturing unit can comprise a laser scanner, which is configured to capture 3D point-cloud data of the surroundings, and a camera, which is configured to capture image data of the surroundings. Alternatively or in addition to this embodiment, the camera can be configured to capture the 3D point-cloud data, for example, if the camera is configured as a time-of-flight (TOF) camera, and the laser scanner can be configured to capture image data, for example, if the laser scanner is configured to capture a colored point cloud.

In a further exemplary embodiment, the navigation commands are continuously provided to the user
- acoustically by means of an audio signal;
- haptically by means of a vibration signal; and/or
- visually by means of visualization on a display.

In a further exemplary embodiment, the method further comprises
- providing a notification to the user; and/or
- providing an intermediate end command to the data capturing unit, the intermediate end command causing the data capturing unit to end capturing data of the surroundings;
   if
- the user leaves the predefined data capturing path, in particular before reaching the end position of the predefined data capturing path;
- the data capturing of the surroundings is disturbed or prevented by an obstacle; and/or
- the user moves at a speed at which the data of the surroundings cannot be captured with sufficient accuracy to enable a generation of a particularly colored 2D and/or 3D model of the surroundings,
wherein the position of the user on the predefined data capturing path at which the intermediate end command is provided is defined as intermediate end position.

In a further exemplary embodiment, the method further comprises
- continuously providing navigation commands to the user to guide the user
   ∘ if the user has left the predefined data capturing path, back on the predefined data capturing path;
   ∘ if the data capturing of the surroundings has been disturbed or prevented by an obstacle, along the predefined data capturing path past the obstacle;
   ∘ if an intermediate end command is provided, to the intermediate end position; and/or
   ∘ to sections of the predefined data capturing path where the surroundings have not yet been captured, and
- providing an intermediate start command to the data capturing unit, the intermediate start command causing the data capturing unit to start capturing data of the surroundings
   ∘ if the user is back on the predefined data capturing path;
   ∘ if the user has been guided past the obstacle;
   ∘ if the user now moves again at a speed at which the data of the surroundings can be captured with sufficient accuracy to enable a generation of a particularly colored 2D and/or 3D model of the surroundings; and/or
   ∘ if the user reaches the intermediate end position.

Such an obstacle can be, for example, an obstacle on the user's path (e.g. a road closure), so that the user has to make a longer detour and therefore has to leave the predefined data capturing path and therefore certain data of the surroundings of the predefined data capturing path cannot be captured, or an obstacle that covers a certain part of the surroundings (e.g. a scaffold), so that the user can stay on the predefined data capturing path but still cannot capture the data of the surroundings of the predefined data capturing path.

In other words, if a user drives out of track (due to non-plannable circumstances, for example: construction sites or taking a wrong exit on a roundabout), the system will stop the capture and re-route the user to the start point of the track, which will be the leftover of the previous one. Then a new residual track is created, called "residual track" or "track left". In such a scenario, there is also a possibility to continue capturing in manual mode. Moreover, this embodiment allows to adapt the plan to the real environment changing conditions such as: closed streets, path deviations or voluntary plan change with a specific set of tools.

In a further embodiment, once the data capturing job is finish, a completion report is shown (how much percentage of the planned tracks have been captured) and if not all the planned tracks where captured a new data capturing job will be created by default with the non-acquired but planned tracks for a later acquisition

In a further exemplary embodiment, the method further comprises receiving information regarding the distance which has to be covered to traverse the predefined data capturing path, in particular the distance from the start position to the end position.

In a further exemplary embodiment, the method further comprises receiving information regarding the expected time required to traverse the predefined data capturing path, in particular the time from the start position to the end position.

In a further exemplary embodiment, the method further comprises providing information regarding how a plurality of predefined data capturing paths are arrangeable such that the data of the surroundings, from which a particularly colored 2D and/or 3D model has to be generated, is captured efficiently, in particular such that the shortest possible distance has to be covered and/or the shortest possible time is required.

Such a plan / such information can be imported in the computer system according to the invention (e.g. Pegasus Field) from an external source or can be defined within the built-in planning module. When the plan is ready the user can proceed with the autonomous acquisition.

In a further embodiment, during predefined data capturing path (track) recording and transfers, guiding instructions are provided to help the user to stick to the plan. After a predefined data capturing path (track) is captured, the user is guided to the next one until the complete data capturing job gets acquired. All the above-mentioned procedure does not require any interaction from the user.

Alternatively or in addition to the embodiment described before, the user can assign different data capturing unit parameters (in other words the sensor unit parameters) to each predefined data capturing path (planned track) and optimize a path/track sequence based on, e.g., his experience and/or on current data, the current data regarding satellite availability and/or the traffic situation to define the most efficient path to acquire the job. The possibility to define different settings to data capturing paths/tracks is important as e.g. the user has to drive through "non-camera allowance" areas (like military areas) where cameras need to be switched off only over a certain part of the track (not necessarily the whole job).

In a further exemplary embodiment, the path information comprises a course of the predefined data capturing path within an environmental map, wherein the environmental map is
- a land map;
- a sea map;
- a city map;
- a building plan;
- a satellite image; or
- an aerial photograph.

The present invention further relates to a computer system for capturing data of surroundings by means of a data capturing unit, in particular wherein the system is configured to carry out the computer-implemented method according to one of the embodiments described above, for which the system comprises a computing unit configured
- to receive path information regarding a predefined data capturing path, the path information comprising at least coordinates, in particular GNSS coordinates, of a plurality of points of the predefined data capturing path; and
- to automatically perform a navigation and data capturing procedure,
wherein the navigation and data capturing procedure comprises:
- to continuously monitor a current position of the data capturing unit;
- to calculate a transfer path from the current position to a start position of the predefined data capturing path;
- to provide continuously navigation commands to the user to guide the user along the transfer path;
- to determine continuously, based on the path information and on the continuously monitored position, whether the data capturing unit has reached the start position;
- if the data capturing unit has reached the start position, to provide a start command to the data capturing unit, the start command causing the data capturing unit to capture data of the surroundings;
- to continuously provide navigation commands to the user to guide the user to an end position of the predefined data capturing path; and
- if the data capturing unit has reached the end position, to provide an end command to the data capturing unit, the end command causing the data capturing unit to end capturing data of the surroundings.

The present invention further relates to a computer program product comprising program code which is stored on a machine-readable medium, or being embodied by an electromagnetic wave comprising a program code segment, and has computer-executable instructions for performing, in particular when run on a computing unit of a computer system described above:
- receiving path information regarding a predefined data capturing path, the path information comprising at least coordinates, in particular GNSS coordinates, of a plurality of points of the predefined data capturing path; and
- automatically performing a navigation and data capturing procedure,
wherein the navigation and data capturing procedure comprises:
- continuously monitoring a current position of the data capturing unit;
- calculating a transfer path from the current position to a start position of the predefined data capturing path;
- continuously providing navigation commands to the user to guide the user along the transfer path;
- continuously determining, based on the path information and on the continuously monitored position, whether the data capturing unit has reached the start position;
- if the data capturing unit has reached the start position, providing a start command to the data capturing unit, the start command causing the data capturing unit to capture data of the surroundings;
- continuously providing navigation commands to the user to guide the user to an end position of the predefined data capturing path; and
- if the data capturing unit has reached the end position, providing an end command to the data capturing unit, the end command causing the data capturing unit to end capturing data of the surroundings.

In one exemplary embodiment of the computer program product according to the invention, the program code comprises computer-executable instructions for performing any step in the computer-implemented method according to one of the embodiments described above.

The features listed below may complement the computer-implemented method according to the invention, thereby forming alternative embodiments previously described in other words. The features are (this list is not exhaustive and is not intended to be restrictive, it is merely examples of possible features):
- adding audio guidance to avoid the need to look at the interface;
- turn by turn instructions to guide the user through the plan;
- intelligent and autonomous map visualization based on the next action to take;
- camera embedded directions;
- 3D and 2D map polylines;
- planning optimization based on traffic conditions and satellites coverage to achieve optimal data quality;
- support scanning areas instead of single tracks -> planning with a polygon and start/stop the capture if entering/exiting the polygon;
- planning the job in a desktop environment.

The computer-implemented method, the computer system and the computer program product according to the invention have the advantage over the prior art that, among other things:
- there is no need for expert users to successfully achieve the desired data capturing result,
- there is no need for two operators in case of a vehicle-based system,
- there is an increased safety letting the user concentrate on the path while capturing the data,
- there is less space for manual mistakes while capturing the data,
- there is an increased efficiency by optimal path definition.

Given these benefits, the result is a considerable reduction in acquisition times and costs together with an improvement of safety and overall project quality by reduction of human mistakes.

### BRIEF DESCRIPTION OF THE DRAWINGS

The inventions are illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
- Fig. 1:: schematic illustration of the received path information regarding the predefined data capturing path;
- Fig. 2:: schematic illustration of an embodiment of the computer-implemented method respectively the computer system according to the invention;
- Fig. 3-4:: schematic illustrations of a software interface of the computer system according to the invention;
- Fig. 5:: schematic illustration of a 3D-model of the surroundings generated based on captured data of the surroundings;
- Fig. 6A-6B:: schematic illustrations of workflows for capturing data using the computer-implemented method respectively the computer system according to the invention..

### DETAILED DESCRIPTION OF THE DRAWINGS

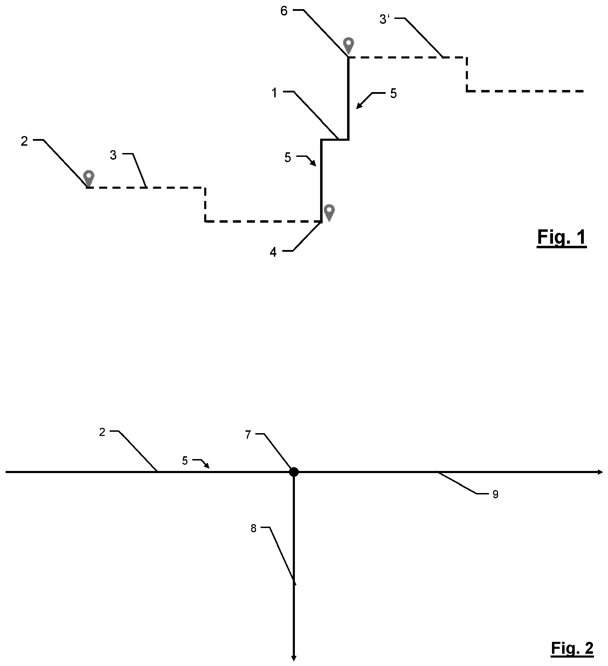

**Figure 1** shows a schematic illustration of the received path information regarding the predefined data capturing path 1. After that in the course of the computer-implemented method respectively the computer system according to the invention the navigation and data capturing procedure is automatically performed comprising the steps of continuously monitoring a current position 2 of the data capturing unit; calculating a transfer path 3 from the current position 2 to a start position 4 of the predefined data capturing path 1; continuously providing navigation commands to the user to guide the user along the transfer path 3; continuously determining, based on the path information and on the continuously monitored position, whether the data capturing unit has reached the start position 4; if the data capturing unit has reached the start position 4, providing a start command to the data capturing unit, the start command causing the data capturing unit to capture data of the surroundings 5; continuously providing navigation commands to the user to guide the user to an end position 6 of the predefined data capturing path 1; and if the data capturing unit has reached the end position 6, providing an end command to the data capturing unit, the end command causing the data capturing unit to end capturing data of the surroundings 5.

If a 2D or 3D model of a larger surroundings has to be created, e.g. of an entire city district with several streets, wherein the data for this cannot be reasonably acquired with a single data acquisition path, then in a further embodiment of the computer-implemented method according to the invention, information are provided on how a plurality of predefined data capturing paths can be arranged such that the data of the environment from which a particularly colored 2D and/or 3D model has to be created are efficiently captured, in particular such that the shortest possible distance has to be covered and/or the shortest possible time is required. The individual predefined data capturing paths are connected by further transfer paths, which is illustrated in **Figure 1** by transfer path 3'.

**Figure 2** shows a schematic illustration of an embodiment of the computer-implemented method respectively the computer system according to the invention. In this case, the user leaves the predefined data capturing path 2 at position 7 and erroneously moves to path 8 before reaching the end position of the predefined data capturing path, whereby the data of the surroundings along path 8 should not be captured at all. The remaining part of the predefined data acquisition path 2, from which the data is now missing, is illustrated as path 9. According to one embodiment of the computer-implemented method according to the invention, in such a case a notification is provided to the user and/or an intermediate end command is provided to the data capturing unit, the intermediate end command causing the data capturing unit to end capturing data of the surroundings, wherein the position 7 of the user on the predefined data capturing path 2 at which the intermediate end command is provided is defined as intermediate end position 7.

In an exemplary embodiment of the computer-implemented method respectively the computer system according to the invention navigation commands (e.g. "in 200 meters move right") are continuously provided to the user (e.g. by an acoustic announcement or the indication on a display) to guide the user back to the intermediate end position 7 and then when the user reaches the intermediate end position provide an intermediate start command to the data capturing unit, the intermediate start command causing the data capturing unit to start again capturing data of the surroundings 5.

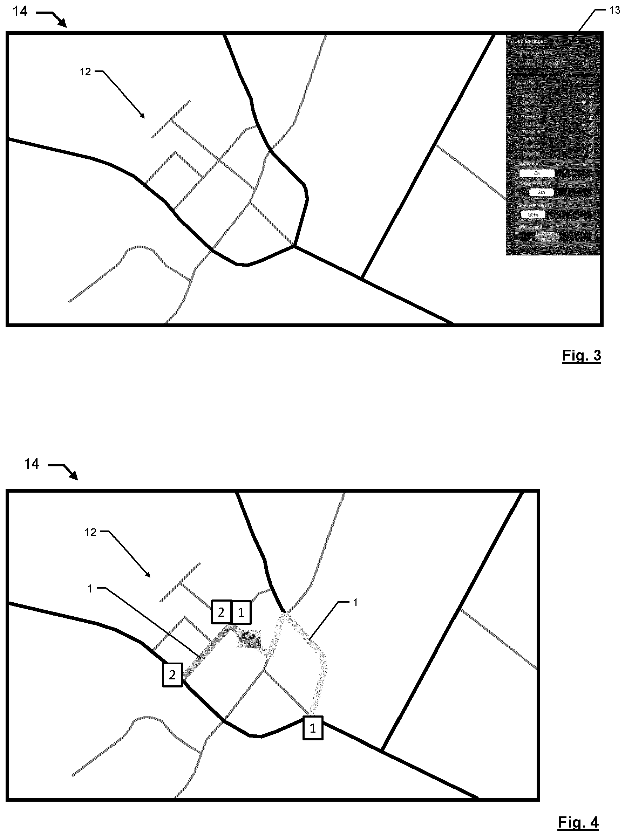

**Figure 3** shows a schematic illustration of a software interface 14 of the computer system according to the invention, which shows an environment map 12 together with a configuration window 13, in which the user can define the settings with regard to the navigation and data capturing procedure and/or the parameters to be complied with for sufficiently accurate data capture by means of the data capturing device are displayed to the user.

The environment map 12 shows several streets, wherein data of the surroundings along these streets are to be captured by means of the data capturing device. For example, the user can click on the road map 12 to define a starting point and an end point of the data capture and the computing unit of the computer system according to the invention then calculates how the predefined data capturing paths are to be arranged accordingly (in other words refinement of the track order) and/or how the corresponding setting parameters (e.g. whether a predefined data capturing path is run/traversed several times) are to be selected in order to ensure the optimum and most (time) efficient data capture. The setting parameters determined by the computing unit can then be taken from the window 13.

Alternatively or in addition to the embodiment of the computer system according to the invention described above, the user can define the predefined data capturing paths, e.g. by clicking on the respective roads, and/or the setting parameters, e.g. by entering corresponding values, himself and the computing unit of the computer system according to the invention then calculates approximately how long the entire data capturing process will take and what distance will be covered in total, wherein during the capturing phase, these calculations / estimations are continuously updated based on the remaining part of the plan.

Among other things, the traffic on the roads, the satellite availability, the kilometers to be covered and/or the battery status of the data capturing unit are also taken into account for the respective calculation.

Such an embodiment of the computer system according to the invention is particularly intended for experienced users who have a precise idea of how exactly the data capturing should be carried out in the corresponding environment or for users who have to react to special circumstances with regard to the data capturing.

**Figure 4** shows a schematic illustration of the software interface 14 of the computer system according to the invention, wherein the computing unit has defined two data capturing paths 1 (labeled with numbers 1 and 2) in the environment map 12 based on the input of the user (e.g. with respect to the start and end points of the data capturing), wherein the data capturing unit mounted on a car has already traveled almost the entire first predefined data capturing path 1 (marked by the light gray path) and has accordingly captured almost all of the data of the surroundings along the first predefined data capturing path 1. After the user has steered the vehicle to the end of the first predefined data path 1, the user receives corresponding navigation commands from the computer system according to the invention, which guide the user to and along the second predefined data path 1. The navigation commands can be communicated to the user, for example by means of an audio signal, which would have the advantage that the user can concentrate completely on driving the car on which the data capturing unit is mounted, thus ensuring the safety of the user and passers-by.

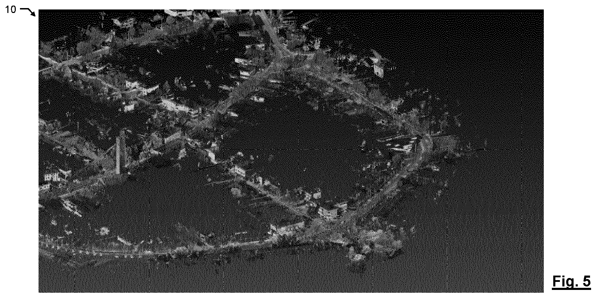

**Figure 5** shows a schematic illustration of a 3D-model 10 of the surroundings generated based on captured data of the surroundings.

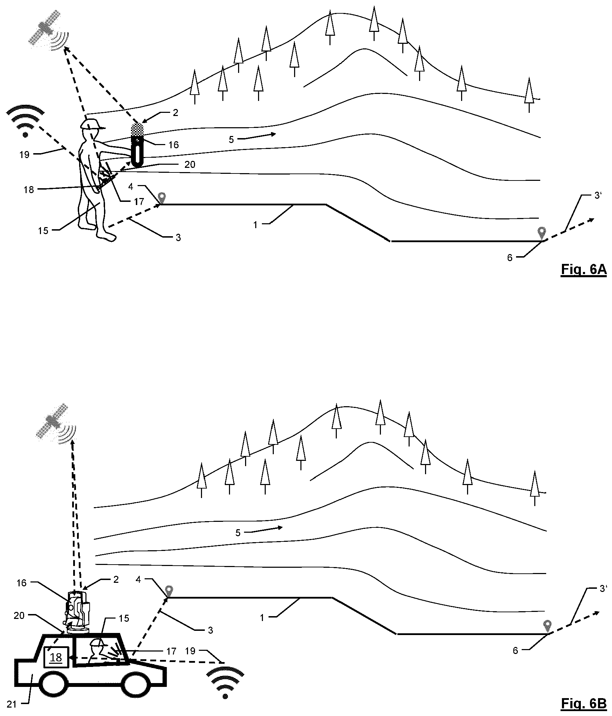

**Figures 6A** and **6B** show schematic illustrations of workflows for capturing data using the computer-implemented method respectively the computer system according to the invention.

In **Figure 6A**, the user 15 is walking and is carrying the data capturing unit 16, which is exemplarily configured as a laser scanner, in his hand. The user 15 is carrying another device in his hand (e.g. a tablet computer), which comprises the computing unit 18. The computing unit 18 receives path information 19 regarding the predefined data capturing path 1, in particular information regarding the start position 4 and the end position 6 of the predefined data capturing path 1 and information regarding the current position 2 of the data capturing unit 16. Based on this information, the computing unit 18 calculates the transfer path 3 from the current position 2 to the start position 4. Subsequently, the user is guided along the transfer path 3 by means of acoustic navigation commands 17, wherein based on the path information 19 and on the continuously monitored position 2 it is continuously determined whether the data capturing unit 16 has reached the start position 4. Due to the acoustic navigation commands 17, the user 15 can fully concentrate on walking and aligning the data capturing unit 16 and the probability of the user 15 walking the wrong way or falling is significantly reduced. As soon as the data capturing unit 16 has reached the start position 4, a start command 20 is provided to the data capturing unit 16, the start command 20 causing the data capturing unit 16 to capture data of the surroundings 5. Subsequently, audible navigation commands 17 are continuously provided to the user 15 to guide the user 15 to the end position 6 of the predefined data capturing path 1 and once the data capturing unit 16 has reached the end position 6, an end command 20 is provided to the data capturing unit 16 causing the data capturing unit 16 to stop capturing data of the environment 5. **Figure 6B** shows in principle the same workflow for data capturing by means of the computer-implemented method respectively the computer system according to the invention, wherein the user 15 is now moving with the transportation means 21 configured as a car, wherein the data capturing unit 16 configured as a laser tracker is mounted on the roof of the car 21.

Although the inventions are illustrated above, partly with reference to some preferred embodiments, it must be understood that numerous modifications and combinations of different features of the embodiments can be made. All of these modifications lie within the scope of the appended claims.

## Claims

1. Computer-implemented method for capturing data of surroundings (5) by means of a data capturing unit (16), wherein the method comprises:
• receiving path information (19) regarding a predefined data capturing path (1), the path information (19) comprising at least coordinates, in particular GNSS coordinates, of a plurality of points of the predefined data capturing path (1); and
• automatically performing a navigation and data capturing procedure,
wherein the navigation and data capturing procedure comprises:
• continuously monitoring a current position (2) of the data capturing unit (16);
• calculating a transfer path (3, 3') from the current position (2) to a start position (4) of the predefined data capturing path (1);
• continuously providing navigation commands (17) to a user (15) to guide the user (15) along the transfer path (3, 3');
• continuously determining, based on the path information (19) and on the continuously monitored position (2), whether the data capturing unit (16) has reached the start position (4);
• if the data capturing unit (16) has reached the start position (4), providing a start command (20) to the data capturing unit (16), the start command (20) causing the data capturing unit (16) to capture data of the surroundings (5);
• continuously providing navigation commands (17) to the user (15) to guide the user (15) to an end position (6) of the predefined data capturing path (1); and
• if the data capturing unit (16) has reached the end position (6), providing an end command (20) to the data capturing unit (16), the end command (20) causing the data capturing unit (16) to end capturing data of the surroundings (5).

2. Computer-implemented method according to claim 1, wherein the current position (2) of the data capturing unit (16) is continuously monitored by means of at least one of the following:
• GNSS;
• SLAM;
• an IMU; and
• an Odometer.

3. Computer-implemented method according to claim 1 or 2, wherein the method further comprises generating a particularly colored 2D and/or 3D model (10) of the surroundings (5) by means of the data captured by the data capturing unit (16).

4. Computer-implemented method according to one of the preceding claims, wherein motion of the data capturing unit (16) is provided by
• the user (15) carrying the data capturing unit (16); or
• the data capturing unit (16) being mounted on a transport means (21) controlled by the user (15),
in particular wherein the transport means (21) is
• a vehicle, in particular a car or motorcycle;
• a boat;
• an airplane; or
• a drone.

5. Computer-implemented method according to one of the preceding claims, wherein the data capturing unit (16) comprises one or more laser scanners and/or one or more cameras and is configured to capture 3D point-cloud data and/or image data of the surroundings (5).

6. Computer-implemented method according to one of the preceding claims, wherein the navigation commands (17) are continuously provided to the user (15)
• acoustically by means of an audio signal;
• haptically by means of a vibration signal; and/or
• visually by means of visualization on a display.

7. Computer-implemented method according to one of the preceding claims, wherein the method further comprises
• providing a notification to the user (15); and/or
• providing an intermediate end command (20) to the data capturing unit (16), the intermediate end command (20) causing the data capturing unit (16) to end capturing data of the surroundings (5);
if
• the user (15) leaves the predefined data capturing path (1), in particular before reaching the end position (6) of the predefined data capturing path (1);
• the data capturing of the surroundings (5) is disturbed or prevented by an obstacle; and/or
• the user (15) moves at a speed at which the data of the surroundings (5) cannot be captured with sufficient accuracy to enable a generation of a particularly colored 2D and/or 3D model (10) of the surroundings (5),
wherein the position of the user (15) on the predefined data capturing path (1) at which the intermediate end command (20) is provided is defined as intermediate end position (7).

8. Computer-implemented method according to claim 7, wherein the method further comprises
• continuously providing navigation commands (17) to the user (15) to guide the user (15)
∘ if the user (15) has left the predefined data capturing path (1), back on the predefined data capturing path (1);
∘ if the data capturing of the surroundings (5) has been disturbed or prevented by an obstacle, along the predefined data capturing path (1) past the obstacle;
∘ if an intermediate end command (20) is provided, to the intermediate end position (7); and/or
∘ to sections (9) of the predefined data capturing path (1) where the surroundings (5) have not yet been captured, and
• providing an intermediate start command (20) to the data capturing unit (16), the intermediate start command (20) causing the data capturing unit to start capturing data of the surroundings (5)
∘ if the user is back on the predefined data capturing path (1);
∘ if the user has been guided past the obstacle;
∘ if the user now moves again at a speed at which the data of the surroundings (5) can be captured with sufficient accuracy to enable a generation of a particularly colored 2D and/or 3D model (10) of the surroundings (5); and/or
∘ if the user reaches the intermediate end position (7).

9. Computer-implemented method according to one of the preceding claims, wherein the method further comprises receiving information regarding the distance which has to be covered to traverse the predefined data capturing path (1), in particular the distance from the start position (4) to the end position (6).

10. Computer-implemented method according to one of the preceding claims, wherein the method further comprises receiving information regarding the expected time required to traverse the predefined data capturing path (1), in particular the time from the start position (4) to the end position (6).

11. Computer-implemented method according to one of the preceding claims, wherein the method further comprises providing information regarding how a plurality of predefined data capturing paths (1) are arrangeable such that the data of the surroundings (5), from which a particularly colored 2D and/or 3D model (10) has to be generated, is captured efficiently, in particular such that the shortest possible distance has to be covered and/or the shortest possible time is required.

12. Computer-implemented method according to one of the preceding claims, wherein the path information (19) comprises a course of the predefined data capturing path (1) within an environmental map (12), wherein the environmental map (12) is
• a land map;
• a sea map;
• a city map;
• a building plan;
• a satellite image; or
• an aerial photograph.

13. Computer system for capturing data of surroundings (5) by means of a data capturing unit (16), in particular wherein the system is configured to carry out the computer-implemented method of one of claims 1 to 12, for which the system comprises a computing unit (18) configured
• to receive path information (19) regarding a predefined data capturing path (1), the path information (19) comprising at least coordinates, in particular GNSS coordinates, of a plurality of points of the predefined data capturing path (1); and
• to automatically perform a navigation and data capturing procedure,
wherein the navigation and data capturing procedure comprises:
• to continuously monitor a current position (2) of the data capturing unit (16);
• to calculate a transfer path (3) from the current position (2) to a start position (4) of the predefined data capturing path (1);
• to provide continuously navigation commands (17) to the user (15) to guide the user (15) along the transfer path (3);
• to determine continuously, based on the path information (19) and on the continuously monitored position (2), whether the data capturing unit (16) has reached the start position (4);
• if the data capturing unit (16) has reached the start position (4), to provide a start command (20) to the data capturing unit (16), the start command (20) causing the data capturing unit (16) to capture data of the surroundings (5);
• to continuously provide navigation commands (17) to the user (15) to guide the user (15) to an end position (6) of the predefined data capturing path (1); and
• if the data capturing unit (16) has reached the end position (6), to provide an end command (20) to the data capturing unit (16), the end command (20) causing the data capturing unit (16) to end capturing data of the surroundings (5).

14. Computer program product comprising program code which is stored on a machine-readable medium, or being embodied by an electromagnetic wave comprising a program code segment, and has computer-executable instructions for performing, in particular when run on a computing unit (18) of a computer system according to claim 13:
• receiving path information (19) regarding a predefined data capturing path (1), the path information (19) comprising at least coordinates, in particular GNSS coordinates, of a plurality of points of the predefined data capturing path (1); and
• automatically performing a navigation and data capturing procedure,
wherein the navigation and data capturing procedure comprises:
• continuously monitoring a current position (2) of the data capturing unit (16);
• calculating a transfer path (3) from the current position (2) to a start position (4) of the predefined data capturing path (1);
• continuously providing navigation commands (17) to the user (15) to guide the user (15) along the transfer path (3);
• continuously determining, based on the path information (19) and on the continuously monitored position (2), whether the data capturing unit (16) has reached the start position (4);
• if the data capturing unit (16) has reached the start position (4), providing a start command (20) to the data capturing unit (16), the start command (20) causing the data capturing unit (16) to capture data of the surroundings (5);
• continuously providing navigation commands (17) to the user (15) to guide the user (15) to an end position (6) of the predefined data capturing path (1); and
• if the data capturing unit (16) has reached the end position (6), providing an end command (20) to the data capturing unit (16), the end command (20) causing the data capturing unit (16) to end capturing data of the surroundings (5).

15. Computer program product according to claim 14, wherein the program code comprises computer-executable instructions for performing any step in the computer-implemented method according to one of claims 2 to 12.
